(19) Europäisches Patentamt

European Patent Office

Office européen des brevets

(11) **EP 0 632 274 B1**

(12) **EUROPÄISCHE PATENTSCHRIFT**

(45) Veröffentlichungstag und Bekanntmachung des Hinweises auf die Patenterteilung:
**21.01.1998 Patentblatt 1998/04**

(51) Int Cl.⁶: **G01P 5/18**

(21) Anmeldenummer: **93810469.2**

(22) Anmeldetag: **02.07.1993**

(54) **Anordnung und Einbausatz zur Messung der Geschwindigkeit einer in einem Zylinder eines Motors rotierenden Luftströmung**

Air swirling speed measuring arrangement using removably mounted devices in a cylinder of an internal combustion engine

Dispositif et appareil interchangeable pour mesurer la vitesse d'un flux d'air en rotation à l'intérieur d'un cylindre de moteur

(84) Benannte Vertragsstaaten:
**DE DK FR IT NL**

(43) Veröffentlichungstag der Anmeldung:
**04.01.1995 Patentblatt 1995/01**

(73) Patentinhaber: **Wärtsilä NSD Schweiz AG**
**8401 Winterthur (CH)**

(72) Erfinder: **Schütz, Mathias**
**CH-8037 Zürich (CH)**

(74) Vertreter: **Hammer, Bruno Dr.**
**Sulzer Management AG**
**KS/Patente/0007,**
**Zürcherstrasse 12**
**8401 Winterthur (CH)**

(56) Entgegenhaltungen:
**EP-A- 0 100 304          US-A- 3 558 898**

- **EXPERIMENTS IN FLUIDS Bd. 10, Nr. 4, 1. Januar 1991 , BERLIN Seiten 230 - 236 XP000243781 B.KHALIGHI 'STUDY OF THE INTAKE TUMBLE MOTION BY FLOW VISUALISATION AND PARTICLE TRACKING VELOCIMETRY'**

**Beschreibung**

Bei den im Brennraum der Zylinder einer Hubkolbenbrennkraftmaschine stattfindenden Verbrennungsvorgängen stellt die Umdrehungs- oder Drallgeschwindigkeit der im Brennraum befindlichen Luft einen Hauptparameter dar. Diese Grösse zu kennen, ist deshalb von grossem Interesse. Theoretisch kann die Umdrehungsgeschwindigkeit der Luftströmung mit Hilfe numerischer Modelle berechnet werden. Experimentelle Ueberprüfungen der Berechnungen können z.B. durch die Lasermesstechnik (LDA) oder durch Filmaufnahmen im Brennraum vorgenommen werden. Diese Methoden sind jedoch sehr aufwendig und für eine routinemässige Messung der Drallgeschwindigkeit nicht geeignet.

Der Erfindung liegt die Aufgabe zugrunde, eine einfach zu handhabende und für routinemässige Messungen geeignete Anordnung zum Bestimmen der Drallgeschwindigkeit im Brennraum zu schaffen.

Diese Aufgabe wird erfindungsgemäss bei einem Verfahren nach dem Oberbegriff des Patentanspruchs 1 und bei einem Zylinder nach dem Oberbegriff des Patentanspruchs 3 dadurch gelöst, dass in dem Brennraum eine Messdüse und zwei optische Messonden eingebaut sind, dass die Messdüse als Brennstoffeinspritzdüse derart ausgebildet ist, dass mindestens ein Teil der von ihr in den Brennraum eingespritzten Brennstoffmenge quer zur Drallströmung der Luft gerichtet ist, und dass ferner die beiden optischen Messonden in Richtung der Drallbewegung der Luft stromunterhalb der Messdüse und die beiden Messonden relativ zueinander in Richtung der Drallbewegung hintereinander angeordnet sind. Dieser Lösung liegt die Idee zugrunde, die Ausbreitung der von der Messdüse erzeugten Flamme mit Hilfe der beiden im Abstand angeordneten Messonden zu messen und aus der dabei festgestellten Zeitdifferenz, die die Flamme für ihre Bewegung von der einen Messonde zur anderen benötigt, auf die Drallgeschwindigkeit zu schliessen. Die Drallgeschwindigkeit ist dabei der Quotient aus der Messstrecke (gleich dem Abstand zwischen den beiden Messonden in Drallrichtung gemessen) in mm durch die Zeitdifferenz der Lichtsignale der beiden Sonden in Millisekunden. Es hat sich gezeigt, dass mit der erfindungsgemässen Anordnung die Drallgeschwindigkeit genauer als bisher bestimmt werden kann.

Eine konstruktiv besonders einfache Anordnung besteht nach einer Weiterbildung der Erfindung darin, dass die Messdüse an einer Stelle eingebaut ist, an der normalerweise eine Brennstoffeinspritzdüse angeordnet ist, und dass die beiden Messonden - in einem Sondenhalter zusammengefasst - an einer Stelle eingebaut sind, an der normalerweise ein Startventil für die Hubkolbenbrennkraftmaschine angeordnet ist. Hierbei kann man also die bereits am Zylinder vorhandenen Bohrungen zum Einbauen der Messdüse und der Messonden verwenden.

Ein Ausführungsbeispiel der Erfindung ist in der folgenden Beschreibung anhand der Zeichnung näher erläutert. Es zeigen:

Fig.1 schematisch einen vertikalen Axialschnitt durch den oberen Teil eines Zylinders,

Fig.2 schematisch eine Ansicht des Zylinderdeckels, vom Brennraum her gesehen,

Fig.3 eine Ansicht der Messdüse in Richtung des Pfeiles A in Fig.1 und

Fig.4 ein Diagramm über den Verlauf der Lichtsignaleintensität in Abhängigkeit der Zeit.

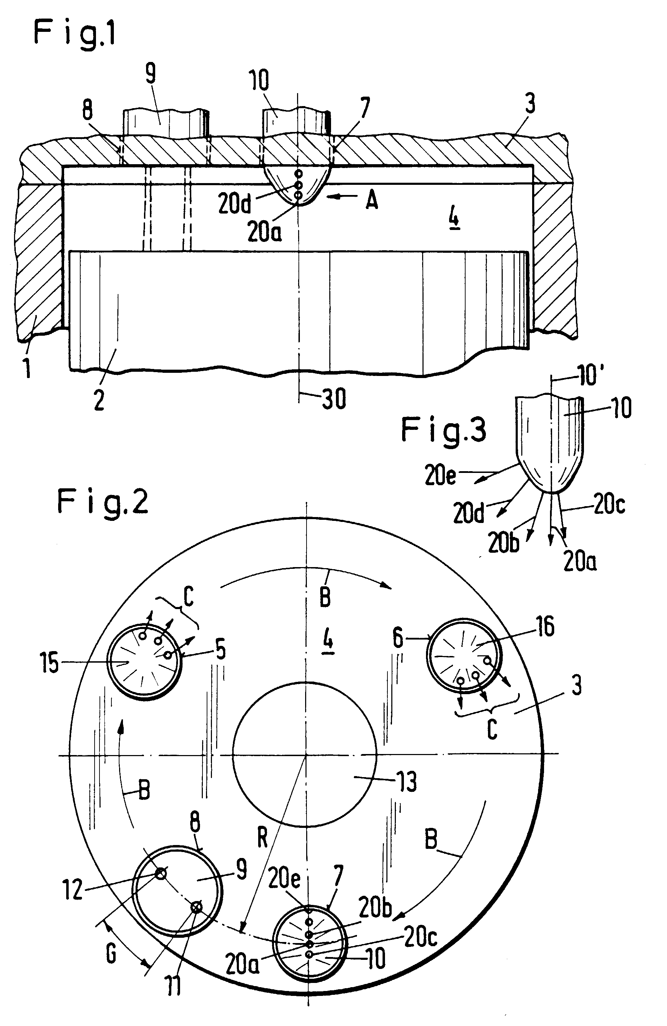

Von einer nicht näher dargestellten mehrzylindrigen, langsamlaufenden Zweitakt-Hubkolbenbrennkraftmaschine, die nach dem Diesel-Verfahren arbeitet, ist in Fig.1 der obere Teil eines Zylinders 1 dargestellt, in dem ein Arbeitskolben 2 auf- und abbeweglich geführt ist. Der Arbeitskolben 2 begrenzt zusammen mit einem auf den Zylinder 1 aufgesetzten Zylinderdeckel 3 einen Brennraum 4. Gemäss Fig.2 sind im Zylinderdeckel 3 - in Umfangsrichtung gleichmässig verteilt - drei in den Brennraum 4 mündende Bohrungen 5, 6, 7 vorgesehen, in denen bei Normalbetrieb des Dieselmotors je eine Einspritzdüse zum Einspritzen von Dieselbrennstoff in den Brennraum 4 angeordnet ist. Gemäss Fig.2 sind nur die Bohrungen 5 und 6 mit einer Einspritzdüse 15 bzw. 16 besetzt. Die Bohrung 7 ist mit einer Düse 10 besetzt, die in den Brennraum 4 ebenfalls Dieselbrennstoff einspritzen kann, der aber Messzwecken dient, weshalb die Düse 10 als "Messdüse" bezeichnet wird, deren Funktion weiter unten näher beschrieben wird.

Der Zylinderdeckel 3 weist zwischen den Bohrungen 7 und 5 eine weitere Bohrung 8 auf, in der im Normalbetrieb des Dieselmotors ein Startventil angeordnet ist. Gemäss Fig.2 ist anstelle des Startventils in der Bohrung 8 eine Sondenhaltevorrichtung 9 eingebaut, die zwei optische Messonden 11 und 12 enthält, deren Funktion ebenfalls weiter unten erläutert wird.

Gemäss Fig.2 ist im Zentrum des Zylinderdeckels 3 ein Auslassventil 13 angeordnet, das geöffnet wird, um die Auspuffgase aus dem Brennraum 4 entweichen zu lassen. Der beschriebene Dieselmotor arbeitet also normalerweise mit Längsspülung.

Die im Brennraum 4 befindliche Luft gelangt in bekannter Weise über nicht dargestellte, am unteren Ende des Zylinders 1 angeordnete Spülluftschlitze in den Zylinder. Die Spülluftschlitze sind so angeordnet, dass die eintretende Luft im Zylinder einer Drallbewegung unterliegt. Diese Drallbewegung um die Achse 30 des Zylinders 1 bleibt auch während des Kompressionshubes des Arbeitskolbens 2 nach dem Schliessen des Auslassventils 13 erhalten und hat im oberen Totpunkt des Arbeitskolbens annähernd die Form einer Blockdrallströmung. Die Drallbewegung der Luft ist in Fig.2 durch die Pfeile B angedeutet. In die sich als Drall bewegende, komprimierte Luft wird im Normalbetrieb des Dieselmotors über die drei Einspritzdüsen Brennstoff in Richtung des Dralls eingespritzt, wie dies durch die Pfeile C in Fig.2 für die Einspritzdüsen 15 und 16 angedeutet ist. Die Grösse der Drallgeschwindigkeit beeinflusst den Verbrennungsvorgang im Brennraum 4. Zum Bestimmen der Drallgeschwindigkeit ist die erfindungsgemässe Anordnung der Messdüse 10 und der optischen Messonden 11 und 12 getroffen worden.

Die Messdüse 10 weist fünf Einspritzlöcher 20a bis 20e auf, die sich alle in einer Ebene befinden, die sich von der Längsachse 10' (Fig.3) der Messdüse 10 aus radial erstreckt. Die Messdüse 10 ist so in der Bohrung 7 angeordnet, dass die erwähnte radiale Ebene rechtwinklig zur Drallbewegungsrichtung steht. Das Einspritzloch 20a fluchtet mit der Längsachse 10', wogegen die beiden Einspritzlöcher 20b und 20c - wie sich aus Fig.3 ergibt - zu beiden Seiten des Einspritzloches 20a angeordnet und nach unten leicht gespreizt sind. Die drei Einspritzlöcher 20a bis 20c sind für die Messzwecke wichtig, da sie im wesentlichen nach unten gerichtete Brennstoffstrahlen erzeugen, die nur durch Transport der Luftströmung in die Messbereiche der in Drallrichtung folgenden Messonden 11 und 12 gelangen. Die zusätzlichen Einspritzlöcher 20d und 20e sind vorgesehen, um über alle fünf Einspritzlöcher die gleiche Brennstoffmenge in den Brennraum 4 einbringen zu können, wie mit der normalerweise in der Bohrung 7 angeordneten Einspritzdüse. Die sich beim Einspritzen mittels der Messdüse 10 bildende Flamme breitet sich gegen die Messonden 11 und 12 aus und wird unter diesen vorbeibewegt. Das Vorbeibewegen der Flamme an den Messonden, die je einen Messbereich von ungefähr 3° haben, löst in diesen Lichtsignale aus, die dann für die Auswertung verwendet werden. Die optischen Messonden 11 und 12 sind von an sich bekannter Bauart; z.B. bestehen sie jeweils aus einer Quarzglasscheibe, einem Lichtleiter und einer Photodiode. Während des Einspritzens mittels der Messdüse 10 kann auch über die beiden Einspritzdüsen 15 und 16 Brennstoff eingespritzt werden; die dabei erzeugten Flammen bleiben vom Beginn der Einspritzung der Messdüse 10 bis zum Ende der dadurch ausgelösten Messung ausserhalb der Messanordnung.

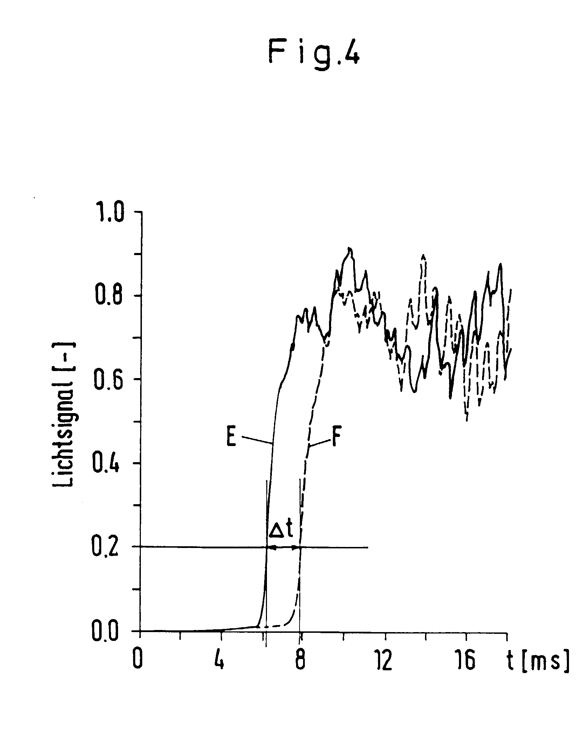

Im Diagramm gemäss Fig.4 ist der Verlauf von zwei Lichtsignalen wiedergegeben, wobei auf der Abszisse die Zeit in Millisekunden aufgetragen ist, und zwar liegt bei 0 ms der Einspritzbeginn der Messdüse 10. Wie sich aus dem Diagramm ergibt, trifft die von der Messdüse 10 erzeugte Flamme 5 ms nach dem Einspritzbeginn bei der Messonde 11 ein, die ein Lichtsignal gemäss der Kurve E auslöst. Die Kurve E hat einen steilen Anstieg und bleibt im weiteren Verlauf annähernd konstant. Nach Brennende fällt sie ab, was in Fig.4 nicht gezeigt ist. Im weiteren Verlauf der Flammenausbreitung passiert die Flamme dann die Messonde 12, was in dieser ein Lichtsignal auslöst, das gemäss der Kurve F in Fig. 4 verläuft. Der Verlauf der Kurve F ist prinzipiell gleich wie der der Kurve E. Aus der Zeitdifferenz Delta t zwischen den beiden Kurven, die bei einem Schwellwert bei ca. 20% des jeweiligen Lichtsignal-Maximums ermittelt wird, lässt sich unter Berücksichtigung der Messstrecke G (gleich Abstand zwischen den Messonden 11 und 12 im Grad) die Drallgeschwindigkeit der Luftströmung im Brennraum 4 bestimmen, und zwar nach der Formel

$$D = \frac{G \; (mm)}{Delta \; t \; (ms)} \; (m/s).$$

Eine weitere Möglichkeit zur Signalauswertung ergibt sich durch Berechnung der Korrelationsfunktion K (T):

$$K \; (T) \sim \int E \; (t) \cdot F \; (t - T) \; dt,$$

wobei E(t) und F(t) die jeweilige Signalintensität der Messonden 11 bzw. 12 bedeuten.

Diese Funktion weist eine Signalspitze auf, aus der sich dann die Zeitverschiebung der Signale E und F bestimmen lässt.

Bedingt durch die turbulente Flammenausbreitung im Brennraum 4, ergeben sich grosse Schwankungen bei der Signalauswertung. Deshalb werden mehr als hundert Motorzyklen statistisch ausgewertet, um eine ausreichende Genauigkeit von ca. 3% zu erreichen.

Nach dem Ende der Messungen werden die Messdüse 10 sowie der Sondenhalter 9 ausgebaut und das dritte Einspritzventil und das Startventil wieder eingebaut, womit der Normalbetriebszustand des Zylinders wiederhergestellt ist.

Abweichend von dem beschriebenen Beispiel kann die Messdüse auch so ausgebildet und angeordnet sein, dass die Strahlrichtung des zu Messzwecken eingespritzten Brennstoffs im wesentlichen parallel zum Boden des Arbeitskolbens 2 ist. Weiter ist es möglich, eine Messdüse allein oder eine Messdüse und eine normale Einspritzdüse vorzusehen.

**Patentansprüche**

1. Verfahren zum Bestimmen der Drallgeschwindigkeit der Luftströmung im Brennraum einer mindestens einen Zylinder aufweisenden Hubkolbenbrennkraftmaschine, dadurch gekennzeichnet, dass in dem Brennraum (4) eine als Brennstoffeinspritzdüse ausgebildete Messdüse (10) und zwei optische Messonden (11,12) eingebaut werden, dass mindestens ein Teil der von der Messdüse (10) in den Brennraum (4) eingespritzten Brennstoffmenge quer zur Drallströmung der Luft gerichtet eingespritzt wird, und dass ferner die optischen Messonden (11,12) in Richtung der Drallbewegung der Luft stromunterhalb der Messdüse (10) und die beiden Messonden (11,12) relativ zueinander in Richtung der Drallbewegung hintereinander angeordnet werden.

**2.** Verfahren nach Anspruch 1, dadurch gekennzeichnet, dass die Messdüse (10) an einer Stelle des Brennraumes (4) eingebaut wird, an der normalerweise eine Brennstoffeinspritzdüse angeordnet ist, und dass die Messonden (11,12) - in einem Sondenhalter (9) zusammengefasst - an einer Stelle des Brennraumes eingebaut werden, an der normalerweise ein Startventil für die Hubkolbenbrennkraftmaschine angeordnet ist.

**3.** Zylinder einer Hubkolbenbrennkraftmaschine mit eingebautem Einbausatz zum Bestimmen der Drallgeschwindigkeit der Luftströmung im Brennraum des Zylinders, dadurch gekennzeichnet, dass der Einbausatz eine als Brennstoffeinspritzdüse ausgebildete Messdüse (10) und zwei optische Messonden (11,12) zum Einbau in den Brennraum (4) umfasst, wobei die Messdüse (10) derart ausgebildet und angeordnet ist, dass mindestens ein Teil der von ihr (10) in den Brennraum (4) eingespritzten Brennstoffmenge quer zur Drallströmung der Luft gerichtet ist, und dass ferner die optischen Messonden (11,12) in Richtung der Drallbewegung der Luft stromunterhalb der Messdüse (10) und die beiden Messonden (11,12) relativ zueinander in Richtung der Drallbewegung hintereinander angeordnet sind.

**4.** Zylinder nach Anspruch 3, dadurch gekennzeichnet, dass die Messdüse (10) mindestens ein in die gleiche Richtung wie die Messbereiche der beiden Messonden (11,12) gerichtetes Einspritzloch aufweist.

**5.** Zylinder nach Anspruch 4, dadurch gekennzeichnet, dass die Messdüse (10) mehr als drei Einspritzlöcher (20a,20b,20c,20d,20e) aufweist, die alle in einer gemeinsamen, sich quer zur Drallströmung der Luft erstreckenden Ebene liegen und von denen drei (20a,20b,20c) in die gleiche Richtung wie die Messbereiche der beiden Messonden (10,11) gerichtet sind.

**Claims**

**1.** A method for determining the swirl speed of the air flow in the combustion chamber of a reciprocating internal combustion engine comprising at least one cylinder,
**characterised in that** one measuring nozzle (10) constructed as a fuel injection nozzle and two optical measuring heads (11, 12) are installed in the combustion chamber (4),

**in that** at least a part of the quantity of fuel injected from the measuring nozzle (10) into the combustion chamber (4) is injected directed at right angles to the swirling flow of the air,
**and in that** the two optical measuring heads (11, 12) are also disposed in the direction of the swirling motion of the air downstream from the measuring nozzle (10) and the two measuring heads (11, 12) are disposed one behind the another in the direction of the swirling motion.

**2.** A method according to Claim 1,
**characterised in that** the measuring nozzle (10) is fitted at a place in the combustion chamber (4) at which a fuel injection nozzle is normally disposed, **and in that** the measuring heads (11, 12) - contained in a measuring head retaining device (9) - are fitted at a place in the combustion chamber at which a start valve for the reciprocating internal combustion engine is normally disposed.

**3.** A cylinder of a reciprocating internal combustion engine with fitted unit for determining the swirl speed of the air stream in the combustion chamber of the cylinder, **characterised in that** the fitted unit includes a measuring nozzle (10) constructed as a fuel injection nozzle and two optical measuring heads (11, 12) for fitting into the combustion chamber (40), wherein the measuring nozzle (10) is constructed and disposed in such a manner that at least one part of the quantity of fuel injected therefrom (10) into the combustion chamber (4) is directed at right angles to the swirling flow of the air,
**and in that** furthermore the optical measuring heads (11, 12) are disposed in the direction of the swirling motion of the air downstream from the measuring nozzle (10) and the two measuring heads (11, 12) are disposed one behind the other in the direction of the swirling motion.

**4.** A cylinder according to Claim 3,
**characterised in that** the measuring nozzle (10) comprises at least one injection hole directed in the same direction as the measurement regions of the two measuring heads (11, 12).

**5.** A cylinder according to Claim 4,
**characterised in that** the measuring nozzle (10) comprises more than three injection holders (20a, 20b, 20c, 20d, 20e), which all lie in a common plane extending at right angles to the swirling flow of the air and three (20a, 20b, 20c) of which are directed in the same direction as the measurement regions of the two measuring heads (10, 11).

**Revendications**

**1.** Procédé de détermination de la vitesse de rotation de l'écoulement d'air dans la chambre de combustion d'un moteur à combustion interne à pistons, présentant au moins un cylindre, caractérisé en ce que, dans la chambre de combustion (4), sont montées une buse de mesure (10), réalisée sous forme de buse d'injection de carburant, et deux sondes de mesure (11, 12) optiques, en ce qu'au moins partie de la quantité de carburant injectée par la buse de mesure (10) dans la chambre de combustion (4) est injectée transversalement par rapport à l'écoulement rotatif de l'air, et en ce que, en outre, les sondes de mesure optiques (11, 12) sont disposées dans la direction du mouvement rotatif de l'air en aval de la buse de la mesure (10) et les deux sondes de mesure (11, 12) sont disposées relativement l'une par rapport à l'autre de façon à être l'une derrière l'autre dans la direction du mouvement rotatif.

2.  Procédé selon la revendication 1, caractérisé en ce que la buse de mesure (10) est montée en un emplacement de la chambre de combustion (4) auquel normalement est disposée une buse d'injection de carburant, et en ce que les sondes de mesure (11, 12) sont montées - regroupées dans un porte-sondes (9) - à un emplacement de la chambre de combustion auquel est normalement disposée une soupape de démarrage destinée au moteur à combustion interne à pistons.

3.  Cylindre de moteur à combustion interne à pistons, comportant un jeu de montage intégré, pour effectuer la détermination de la vitesse de rotation de l'écoulement d'air dans la chambre de combustion du cylindre, caractérisé en ce que le jeu de montage comprend une buse de mesure (10) réalisée sous forme de buse d'injection de carburant et deux sondes de mesure optique (11, 12), à monter dans la chambre de combustion (4), la buse de mesure (10) étant réalisée et disposée de manière qu'au moins une partie de la quantité de carburant injectée par la buse (10) dans la chambre de combustion (4) est orientée transversalement par rapport à l'écoulement rotatif de l'air, et en ce que, en outre, les sondes de mesure (11, 12) sont disposées dans la direction du mouvement rotatif de l'air, en aval de la buse de mesure (10), et les deux sondes de mesure (11, 12) sont disposées l'une par rapport à l'autre en étant placées l'une derrière l'autre dans la direction du mouvement rotatif.

4.  Cylindre selon la revendication 3, caractérisé en ce que la buse de mesure (10) présente au moins un trou d'injection orienté dans la même direction que les zones de mesure des deux sondes de mesure (11, 12).

5.  Cylindre selon la revendication 4, caractérisé en ce que la buse de mesure (10) présente plus de trois trous d'injection (20a, 20b, 20c, 20d, 20e), qui sont tous orientés dans un plan commun s'étendant transversalement à l'écoulement rotatif de l'air et dont trois trous (20a, 20b, 20c) sont orientés dans la même direction que les zones de mesure des deux sondes de mesures (10, 11).

EP 0 632 274 B1

Fig.1

Fig.2

Fig.3

# Fig.4